# FASCICULE DE BREVET EUROPEEN

(11) **EP 3 297 828 B1**
(45) Date de publication et mention de la délivrance du brevet: **18.03.2020**
(21) Numéro de dépôt: 16731218.0
(22) Date de dépôt: 20.05.2016
(51) Int. Cl.: B32B 33/00, E04C 2/04, F21V 21/002, B32B 13/08, B32B 37/12

(54) **PANNEAU SANDWICH ELECTRIQUEMENT CONDUCTEUR**
ELEKTRISCH LEITENDE SANDWICHPLATTE
ELECTRICALLY CONDUCTING SANDWICH PANEL

(30) Priorité: 22.05.2015 FR 1554618
(43) Date de publication de la demande: 28.03.2018
(73) Titulaire: Pixlum, 85300 Soullans (FR)
(72) Inventeur: JOLLY, Philippe, 85300 Soullans (FR)
(74) Mandataire: Dutreix, Hugues Ours
(86) Numéro de dépôt international: PCT/FR2016/051199
(87) Numéro de publication internationale: WO 2016/189236

(56) Documents cités:
- WO-A1-2004/063484
- WO-A1-2007/006147
- DE-A1-102012 013 831
- DE-U1-202004 011 454

## Description

### DOMAINE DE L'INVENTION

La présente invention concerne de manière générale les panneaux sandwich électriquement conducteurs auxquels sont destinés à être connectés électriquement des dispositifs électriques.

### ART ANTERIEUR

On connaît de l'état de la technique des panneaux sandwich électriquement conducteur qui comprennent une première couche de mousse polyuréthane, une deuxième couche métallique, une troisième couche de mousse polyuréthane, une quatrième couche métallique et une cinquième couche de mousse polyuréthane. Lesdites couches métalliques forment des pistes d'alimentation électrique dans lesquelles peuvent être piquées des broches de dispositif d'éclairage à LED pour permettre d'alimenter lesdits dispositifs d'éclairage à LED.

Ledit panneau peut être fixé sur un support au mur ou au plafond. La première couche en mousse polyuréthane, qui est orientée du côté intérieur de la pièce, est destinée à être habillée. Cependant, la demanderesse a constaté que ces panneaux sont fragiles et que les artisans ne savent généralement pas comment travailler ladite première couche pour l'habiller. En outre, la protection anti-feu qu'offre un tel panneau est faible.

La demanderesse a ainsi tenté dans un premier temps de remplacer la première couche en mousse de polyuréthane du panneau par une plaque de plâtre. Cependant, après avoir piqué les broches de dispositifs à LED à travers le panneau, la demanderesse a constaté que les dispositifs à LED ne fonctionnaient pas alors que les couches métalliques du panneau étaient bien alimentées.

Le document WO2007/006147 A1 décrit un appareil d'éclairage à panneau modulaire comprenant une carte de puissance à couches multiples et un ou plusieurs modules d'éclairage.

Le document WO2004063484 A1 décrit un élément de recouvrement du type plaque qui présente une surface électroconductrice et une couche électroconductrice éloignée de ladite surface et séparée de celle-ci par une couche isolante.

La présente invention a pour but de proposer un nouveau panneau permettant de palier à tout ou partie des problèmes exposés ci-dessus.

En particulier, un but de l'invention est de fournir un panneau résistant, dont la face d'exposition est facile à travailler, offrant une meilleure protection anti-feu et pour lequel le risque de dysfonctionnement des dispositifs électriques piqués dans le panneau est réduit.

### RESUME DE L'INVENTION

A cet effet, l'invention a pour objet un panneau sandwich électriquement conducteur, caractérisé en ce que ledit panneau sandwich comprend dans l'ordre suivant :
- une première couche formée d'une plaque qui comprend deux feuilles de carton emprisonnant un matériau électriquement isolant, tel que du plâtre ;
- une deuxième couche en matériau électriquement isolant ;
- une troisième couche en matériau électriquement conducteur ;
- une quatrième couche en matériau électriquement isolant ;
- une cinquième couche en matériau électriquement conducteur ;
- une sixième couche en matériau électriquement isolant.

Lors du piquage d'une broche de dispositif électrique dans le panneau, la présence de la deuxième couche en matériau électriquement isolant entre la plaque et la piste d'alimentation formée par la troisième couche en matériau électriquement conducteur, permet à la deuxième feuille de carton de la plaque, de se déformer en cône contre cette deuxième couche, tandis que la deuxième couche laisse passer la broche sans venir s'interposer entre la broche et la piste d'alimentation au cours du piquage de la broche.

Au contraire, dans la solution tentée par la demanderesse où le panneau était formé d'une plaque appliquée directement contre une piste d'alimentation formée par une couche métallique, le piquage de la broche dans le panneau provoquait la déformation en cône de la deuxième feuille de carton qui venait s'interposer entre la piste d'alimentation et la broche. Ainsi, la broche n'était plus suffisamment en contact électrique avec la piste d'alimentation car au moins partiellement isolée de la piste par la feuille de carton déformée. Il est fait remarquer que, si dans la solution tentée par la demanderesse décrite ci-avant, ladite plaque était une plaque de plâtre, le même problème de contact électrique se pose avec n'importe quelle autre plaque qui comprend deux feuilles de carton emprisonnant un matériau électriquement isolant, lorsque cette plaque est appliquée directement contre une piste d'alimentation formée par une couche métallique.

La présence de la deuxième couche en matériau électriquement isolant, distincte d'une feuille de carton, permet de maintenir écartée la deuxième feuille de carton, même à l'état déformé en cône, par rapport à la piste d'alimentation formée par la troisième couche en matériau électriquement conducteur.

Selon une caractéristique avantageuse de l'invention, les deuxième et troisième couches, ainsi que les quatrième et cinquième couches, sont collées entre elles par dépôt de lignes de colle avec une quantité régulière de colle le long de chaque ligne.

En particulier, la colle est déposée sous forme de cordons dont le diamètre est inférieur au diamètre de la ou chaque broche du dispositif piqué dans le panneau.

Selon une caractéristique avantageuse de l'invention, la deuxième couche présente une épaisseur inférieure à celle de chacune des quatrième et sixième couches.

Selon une caractéristique avantageuse de l'invention, au moins l'une, de préférence chacune, des couches électriquement conductrices comprend deux feuilles métalliques, de préférence en aluminium, et une feuille en matériau élastique emprisonnée entre lesdites feuilles métalliques.

Selon une caractéristique avantageuse de l'invention, ledit panneau sandwich est en outre équipé d'au moins un dispositif électrique, de préférence un dispositif d'éclairage, par exemple à LED, qui comprend une ou deux broches de connexion destinées à être piquées dans le panneau et portant deux contacts électriques, les deux contacts électriques étant répartis sur la ou chacune desdites broches de manière à ce que, à l'état piqué de la ou des broches dans le panneau, l'un des contacts électriques touche l'une des couches électriquement conductrice, sans toucher l'autre couche qui est touchée par l'autre contact électrique.

Selon un aspect particulier, la deuxième couche en matériau électriquement isolant est d'épaisseur au moins égale au diamètre de la ou de chaque broche du dispositif électrique piquée dans le panneau.

L'invention concerne aussi un dispositif électrique, de préférence un dispositif d'éclairage, par exemple à LED, qui comprend une ou deux broches de connexion destinées à être piquées dans un panneau sandwich électriquement conducteur et portant deux contacts électriques, les deux contacts électriques étant répartis sur la ou chacune desdites broches de manière à ce que, à l'état piqué de la ou des broches dans le panneau, l'un des contacts électriques touche l'une des couches électriquement conductrice, sans toucher l'autre couche qui est touchée par l'autre contact électrique.

Selon une caractéristique avantageuse de l'invention, ledit panneau sandwich est en outre équipé de deux connecteurs, l'un des connecteurs étant apte à connecter l'une des couches électriquement conductrices à une borne d'une alimentation électrique, et l'autre des connecteurs étant apte à connecter l'autre des couches électriquement conductrices à l'autre borne de l'alimentation électrique. Chaque connecteur présente une forme en U, l'extrémité libre de chaque branche étant pointue et chaque branche du U étant fendue longitudinalement depuis son extrémité libre jusqu'à la zone de liaison entre ladite branche et le fond du U.

Selon une caractéristique avantageuse de l'invention, chaque branche de connecteur est piquée sur une tranche du panneau sandwich de sorte que les portions de branche qui s'étendent de part et d'autre de la fente de ladite branche sont enfoncées respectivement dans les quatrième et sixième couches, ou respectivement dans les deuxième et quatrième couches, qui prennent en sandwich la troisième, ou respectivement cinquième, couche électriquement conductrice, ladite troisième, ou respectivement cinquième couche électriquement conductrice étant prise dans la fente et en contact électrique avec les bords de fente correspondant.

Selon une caractéristique avantageuse de l'invention, le matériau des deuxième, quatrième et sixième couches est de densité inférieure à 300 Kg/m3.

L'invention concerne aussi un connecteur apte à connecter l'une des couches électriquement conductrices d'un panneau sandwich électriquement conducteur à une borne d'une alimentation électrique, le connecteur présentant une forme en U, l'extrémité libre de chaque branche étant pointue et chaque branche du U étant fendue longitudinalement depuis son extrémité libre jusqu'à la zone de liaison entre ladite branche et le fond du U.

Selon une caractéristique avantageuse de l'invention, les branches et le fond du U formant chaque connecteur sont plats.

Selon une caractéristique avantageuse de l'invention, ledit panneau sandwich est en outre équipé de moyens de fixation dudit panneau sandwich sur un support, lesdits moyens de fixation comprenant une vis auto-foreuse qui présente une tête de vis et un corps métallique comprenant une portion d'extrémité filetée, et entre ladite tête et la portion d'extrémité filetée, une portion lisse, ladite portion lisse présentant un revêtement électriquement isolant, par exemple en téflon ou époxy, de préférence de couleur différente de celle du corps de vis ainsi revêtu.

L'invention concerne aussi une vis auto-foreuse pour la fixation d'un panneau sandwich électriquement conducteur, ladite vis présentant une tête de vis et un corps métallique comprenant une portion d'extrémité filetée, et entre ladite tête et la portion d'extrémité filetée, une portion lisse, ladite portion lisse présentant un revêtement électriquement isolant, par exemple en téflon ou époxy, de préférence de couleur différente de celle du corps de vis ainsi revêtu.

Selon une caractéristique avantageuse de l'invention, la vis présente un diamètre inférieur à l'épaisseur de la quatrième couche, c'est-à-dire de la couche interposée entre les deux pistes d'alimentation électrique formées par les troisième et cinquième couches.

Selon une caractéristique avantageuse de l'invention, ladite portion lisse est de longueur adaptée de manière à traverser les couches électriquement conductrices, tout en laissant une partie du filetage de la vis en prise dans la sixième couche pour maintenir le panneau sandwich en appui contre le support dans lequel est pris la vis.

L'invention concerne aussi un ensemble comprenant un panneau sandwich , au moins un dispositif électrique, qui comprend une ou deux broches de connexion destinée(s) à être piquée(s) dans le panneau sandwich, et un outil de poinçonnage comprenant un corps de saisie destiné à être saisi par la main d'un opérateur, et un ou deux poinçons de même longueur pointus à leur extrémité libre et de forme allongée.

Selon une caractéristique avantageuse de l'invention, le diamètre des poinçons est supérieur ou égal au diamètre de la ou des broches du dispositif électrique.

### BREVE DESCRIPTION DES DESSINS

D'autres caractéristiques et avantages de l'invention ressortiront encore de la description qui suit, laquelle est purement illustrative et non limitative et doit être lue en regard des dessins annexés, sur lesquels :
- la figure 1 est une vue en coupe d'un panneau sandwich et de deux broches de longueurs différentes d'un dispositif électrique piqué dans ledit panneau, conformément à un mode de réalisation de l'invention ;
- la figure 2 est une vue similaire à celle de la figure 1 pour un mode de réalisation conforme à l'invention selon lequel le dispositif électrique comprend une seule broche ;

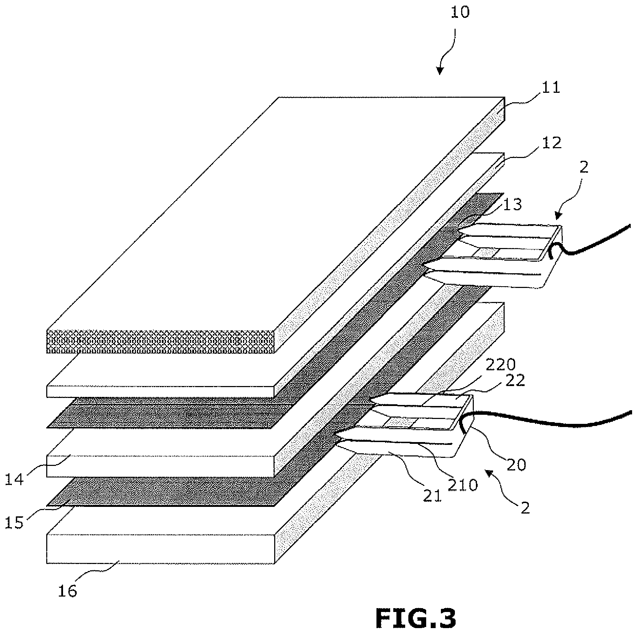

- la figure 3 est une vue éclatée en perspective d'un panneau sandwich et de deux connecteurs en U faisant apparaitre les fentes des branches du U conformément à un mode de réalisation de l'invention ;
- la figure 4 est une vue de la figure 3 à l'état assemblé du panneau sandwich et à l'état inséré d'un des connecteurs sur une tranche du panneau, à cheval des couches électriquement conductrices correspondantes ;
- la figure 5 est une vue en perspective d'un panneau sandwich et d'une vis en prise dans un rail, conformément à un mode de réalisation de l'invention ;
- la figure 6 est une vue de face d'un outil de poinçonnage, conformément à un mode de réalisation de l'invention.

### DESCRIPTION DETAILLEE

En référence aux figures et comme rappelé ci-dessus, l'invention concerne un panneau sandwich 10 électriquement conducteur auquel sont destinés à être connectés électriquement des dispositifs électriques. On entend par dispositif électrique tout dispositif ou appareil destinés à être alimentés électriquement tels qu'un dispositif d'éclairage, une prise de courant ou un capteur.

Le panneau sandwich 10 comprend une première couche 11 formée d'une plaque qui comprend deux feuilles 111, 112 de carton emprisonnant un matériau électriquement isolant, tel que du plâtre.

En variante, le matériau de ladite plaque peut être du ciment ou un autre matériau. Ledit panneau comprend aussi une sixième couche 16 en matériau électriquement isolant, une deuxième couche 12 en matériau électriquement isolant, une troisième couche 13 en matériau électriquement conducteur, une quatrième couche 14 en matériau électriquement isolant et une cinquième couche 15 en matériau électriquement conducteur.

D'autres couches peuvent être ajoutées et/ou être interposées entre lesdites couches.

Le matériau électriquement isolant utilisé pour réaliser les couches 12, 14 et 16 est un matériau qui ne se déforme pas en cône lorsqu'il est piqué, à la différence d'une feuille de carton par exemple. Ledit matériau peut être une mousse de polyuréthane ou polystyrène. Le matériau peut aussi être du type laine, par exemple de la laine de verre ou de roche compressée. Le matériau peut aussi être fibreux, tel que du bois, notamment du balsa, ou être une mousse faite à partir de bois. Ledit matériau peut aussi être un textile.

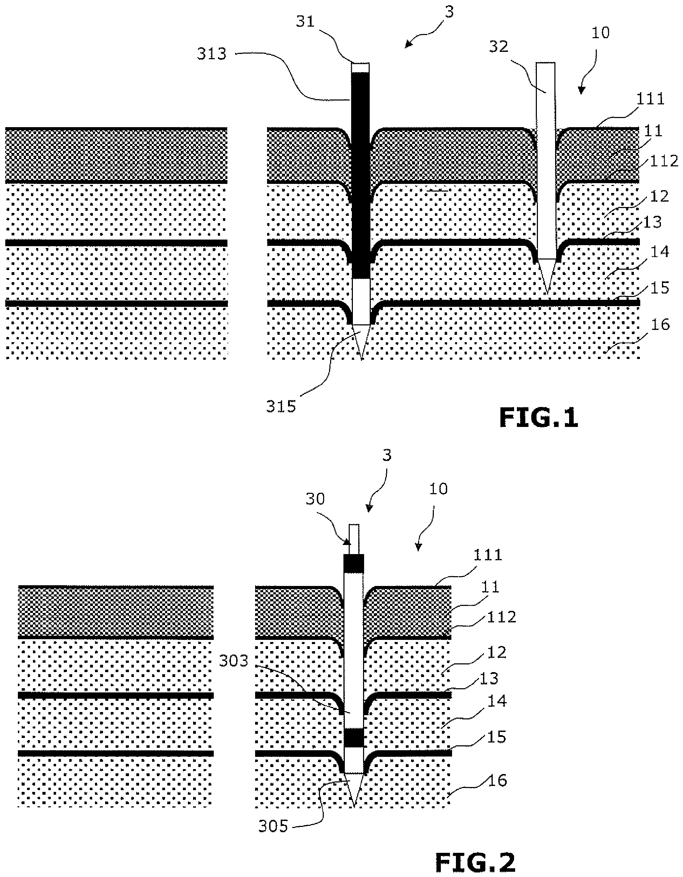

Préférentiellement, le matériau est un matériau dit tendre dont la densité est inférieure à 300 Kg/m3. L'utilisation d'un tel matériau permet d'enfoncer aisément, par exemple à la main, chaque connecteur d'alimentation dans la tranche des couches 12 et 14 ou dans la tranche des couches 14 et 16 du panneau. Autrement dit, un tel choix de matériaux permet d'insérer latéralement chaque connecteur dans le panneau à la manière d'une punaise, sans avoir à prévoir un dégagement spécifique au sein du panneau et sans risquer de détériorer les connecteurs.
Les deux couches électriquement conductrices 13, 15 sont aptes à former deux pistes d'alimentation positive et négative (ou phase et neutre) d'un dispositif électrique qui comprend deux contacts électriques pour son alimentation. Les deux contacts électriques peuvent être portés par une même broche 30 (figure 2) ou répartis sur deux broches 31, 32 (figure 1). Comme détaillé ci-après, la ou chaque broche est destinée à être piquée dans le panneau 10 pour amener l'un des contacts électriques contre la couche électriquement conductrice 13, et l'autre contre la couche électriquement conductrice 15.

On peut aussi prévoir que le panneau comporte au moins une couche électriquement conductrice supplémentaire, qui peut être utilisée pour transmettre un signal ou être raccordée à la terre.

Les pistes sont destinées à être raccordées par des connecteurs 2 (détaillés ci-après) à une alimentation électrique, de préférence une alimentation secteur TBT ou TBTS, par exemple une alimentation de 12V. L'alimentation continue TBTS peut être réalisée à l'aide d'un transformateur raccordé au secteur TBT.

L'épaisseur des couches électriquement conductrices 13 et 15 est inférieure à l'épaisseur des autres couches. Les couches électriquement conductrices présentent en particulier une épaisseur inférieure à 300 microns, et de préférence présentent une épaisseur de l'ordre de 100 à 200 microns.

Lesdites couches du panneau sont collées entre elles. En particulier, les couches 13 et 14, et 15 et 16 sont collées entre elles par dépôt de lignes de colle avec une quantité régulière de colle le long de chaque ligne, pour éviter qu'une zone de contact électrique d'une broche de dispositif électrique traverse une zone de surépaisseur de colle et soit ainsi isolée électriquement de la couche électriquement conductrice avec laquelle ladite broche est destinée à être en contact. En effet une zone de surépaisseur de colle pourrait former un cône d'isolation entre la couche électriquement conductrice correspondante et la broche.

Lesdites lignes de colle peuvent être réalisées de manière droite et/ou parallèle, par exemple de façon sinueuse, sans point d'inflexion qui risquerait d'entrainer un dépôt local plus important de colle.

Le collage est réalisé de préférence par un procédé de collage sous pression à chaud de type « hot melt» ou thermofusible, ou à froid de type colle polyuréthane.

Selon un mode de réalisation, la deuxième couche 12 qui isole et écarte la plaque 11 de la couche électriquement conductrice 13 présente une épaisseur inférieure à celle de chacune des autres couches 14, 16.

Selon un aspect particulier, la deuxième couche 12 en matériau électriquement isolant est d'épaisseur au moins égale au diamètre de la ou de chaque broche 30 ; 31, 32 du dispositif électrique 3 piquée dans le panneau pour permettre de maintenir la feuille de carton 112, qui est déformée en cône par la broche qui la traverse, écartée de la couche électriquement conductrice 13.

Avantageusement, chacune des couches 13, 15 électriquement conductrices comprend deux feuilles métalliques, de préférence en aluminium, et une feuille en matériau élastique emprisonnée entre lesdites feuilles métalliques. Ainsi, lorsqu'un dispositif électrique muni d'une ou de deux broches portant les contacts électriques, est piqué dans le panneau depuis la plaque, chacune des couches 13, 15 forme un complexe élastique rappelant la feuille d'aluminium supérieure contre la broche qui la traverse et ainsi favorise le contact électrique entre le contact correspondant porté par la broche et ladite couche électriquement conductrice.

Selon un mode de réalisation, un dispositif électrique, de préférence un dispositif d'éclairage 3 par exemple à LED, est piqué sur ledit panneau sandwich 10. A cet effet, le dispositif électrique comprend une broche 30 ou deux broches 31, 32 de connexion destinées à être piquées dans le panneau 10. Dans le cas d'un dispositif à une broche, ladite broche porte deux contacts 303, 305 à des hauteurs différentes en étant isolés l'un de l'autre. Dans le cas illustré à la figure 2, les contacts 303, 305 sont coaxiaux. Les deux contacts 303, 305 sont destinés à venir respectivement contre les couches 13, 15 sans toucher l'autre couche 15, 13.

Dans l'exemple illustré à la figure 1 où le dispositif électrique utilisé comprend deux broches 31, 32, la première broche 31 comprend une partie conductrice 315 apte à venir en contact avec la couche conductrice 15 sans être en contact électrique avec la couche 13. La deuxième broche 32 est apte à venir en contact avec la couche conductrice 13 sans venir en contact électrique avec la couche conductrice 15.

L'absence de contact électrique entre une broche et une couche conductrice donnée peut être réalisée en concevant la longueur de la broche de sorte que à l'état piqué, elle traverse l'autre couche conductrice mais sans atteindre ladite couche conductrice donnée (voir la broche 32 de la figure 1) ou de sorte que la partie de la broche qui traverse ladite couche conductrice donnée est isolée électriquement (la partie 313 de la broche 31 à la figure 1 est isolée de la piste 13).

La partie d'une broche destinée à être isolée est munie d'un revêtement qui peut être formé par une peinture ou gaine isolante par exemple en matériau rigide.

Le panneau sandwich 10 est en outre équipé de deux connecteurs 2.

L'un des connecteurs 2 est apte à connecter l'une des couches 13, 15 à une borne d'une alimentation électrique, et l'autre des connecteurs est apte à connecter l'autre des couches 13, 15 à l'autre borne de l'alimentation électrique.

Chaque connecteur 2 présente une forme en U. L'extrémité libre de chaque branche 21, 22 est pointue et chaque branche 21, 22 du U est fendue longitudinalement depuis son extrémité libre jusqu'à la zone de liaison entre ladite branche 21, 22 et le fond 20 du U.

Chaque couche 12, 14 et 16 présente une épaisseur suffisante pour que la branche d'un connecteur puisse rentrer dans l'épaisseur de ladite couche.

Chaque connecteur peut être équipé d'un élément formant domino pour raccorder un fil électrique au niveau de la partie formant le fond du U du connecteur. L'autre extrémité du fil électrique est raccordée à l'alimentation électrique. En variante, ledit fil électrique peut être soudé ou serti directement au connecteur.

Chaque branche 21, 22 de connecteur 2 est piquée sur une tranche du panneau sandwich 10 de sorte que les portions de branche qui s'étendent de part et d'autre de la fente 210, 220 de ladite branche sont enfoncées respectivement dans les quatrième et sixième couches 14, 16, ou respectivement dans les deuxième 12 et quatrième 14 couches, qui prennent en sandwich la troisième ou cinquième couche 13, 15 électriquement conductrice que l'opérateur souhaite raccorder par ledit connecteur à l'alimentation électrique.

Chaque couche 13, 15 électriquement conductrice est prise dans les fentes 210, 220 du connecteur 2 correspondant et en contact électrique avec les bords de fente correspondant.

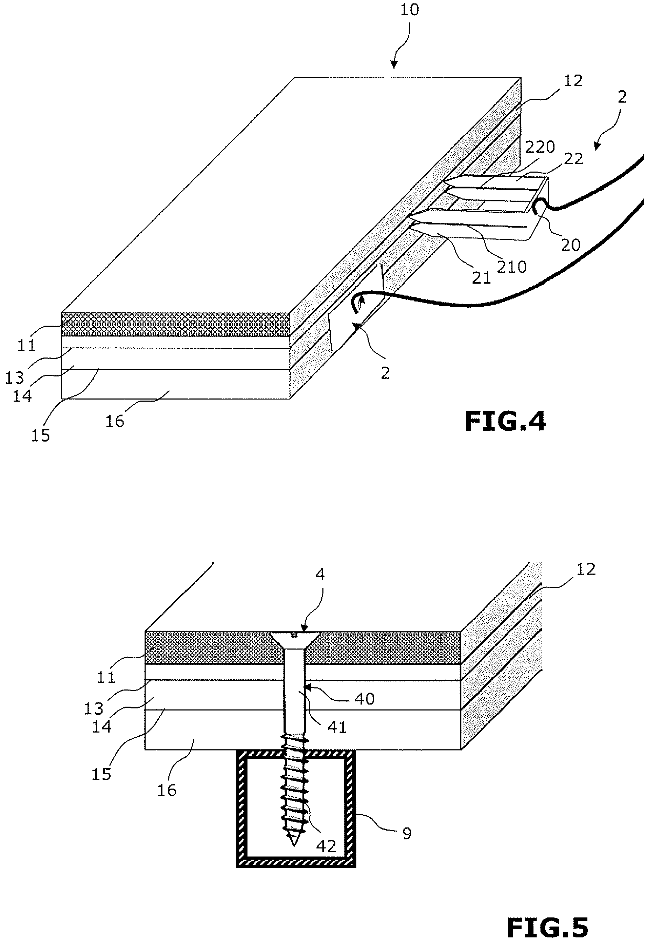

Les branches 21, 22 et le fond 20 du U de chaque connecteur sont plats pour permettre de l'enfoncer jusqu'en appui de la tranche comme illustré à la figure 4, et ainsi limiter l'encombrement du panneau.

Comme illustré à la figure 5, ledit panneau sandwich 10 peut être fixé à un support 9, par exemple un rail métallique ou un support en bois tel qu'une lambourde, à l'aide de vis 4 autoforeuse.

Selon un mode de réalisation, ladite vis 4 présente une tête de vis et un corps 40 métallique qui comprend une portion d'extrémité 42 filetée, et entre ladite tête et la portion d'extrémité filetée, une portion lisse 41. Le corps 40 métallique est de préférence en acier ayant subi un traitement thermique pour le rendre autoforant.

Ladite portion lisse 41 présente un revêtement électriquement isolant, par exemple en téflon ou en époxy, de préférence de couleur différente de celle du corps de vis 4 ainsi revêtu. Ledit revêtement se présente de préférence sous forme d'une peinture cuite pour éviter qu'elle ne s'écaille. La couleur peut être choisie blanche de manière à permettre de visualiser une éventuelle rayure qui pourrait dégrader l'isolation électrique de la portion lisse.

La vis 4 présente un diamètre inférieur à l'épaisseur de la quatrième couche 14, ce qui permet d'éviter que la cinquième couche 15 ne vienne en contact par déformation en cône avec la troisième couche 13 au cours du vissage.

Ladite portion lisse 41 isolée de la vis 4 est de longueur adaptée de manière à traverser les troisième et cinquième couches 13, 15 électriquement conductrices, tout en laissant une partie du filetage de la vis en prise dans la sixième couche 16 pour maintenir le panneau sandwich 10 en appui contre le support 9 dans lequel est pris la vis 4.

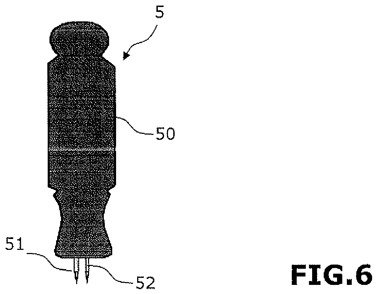

Selon un mode de réalisation, il est prévu de faciliter le piquage, dans le panneau sandwich, d'un dispositif électrique à une ou deux broches de connexion, par exemple conforme à celui présenté en figures 1 ou 2, à l'aide d'un outil de poinçonnage 5 adapté comme illustré à la figure 6.

L'outil de poinçonnage 5 comprend un corps 50 de saisie destiné à être saisi par la main d'un opérateur, et un ou deux poinçons 51, 52 pointus à leur extrémité libre et de forme allongée. La longueur de chaque poinçon est adaptée pour traverser l'épaisseur de la plaque de plâtre, en particulier le matériau rigide pris entre les feuilles de carton. Le corps 50 de saisie est allongé et de forme générale cylindrique.

Selon un mode de réalisation et dans le cas d'un outil de poinçonnage 5 à deux poinçons 51, 52, lesdits poinçons sont de même longueur et s'étendant parallèlement l'un par rapport à l'autre depuis la face du corps de saisie destinée à être dirigée vers le panneau. L'axe du corps de saisie est parallèle à l'axe de chaque poinçon.

On peut prévoir que le diamètre des poinçons 51, 52 est supérieur ou égal au diamètre de la ou des broches du dispositif électrique.

L'outil de poinçonnage peut ainsi être utilisé pour pré-percer le panneau depuis la plaque et insérer par la suite la ou les broches du dispositif électrique dans le panneau, ce qui est particulièrement avantageux lorsque les deux broches ne sont pas de même longueur. En effet, un piquage sans pré-perçage avec un tel dispositif électrique risquerait de tordre les broches.

L'invention n'est pas limitée aux modes de réalisation illustrés dans les dessins. En conséquence, il doit être entendu que, lorsque les caractéristiques mentionnées dans les revendications annexées sont suivies par des signes de référence, ces signes sont inclus uniquement dans le but d'améliorer l'intelligibilité des revendications et ne sont nullement limitatifs de la portée des revendications.

De plus, le terme « comprenant » n'exclut pas d'autres éléments ou étapes. En outre, des caractéristiques ou étapes qui ont été décrites en référence à l'un des modes de réalisation exposés ci-dessus peuvent également être utilisées en combinaison avec d'autres caractéristiques ou étapes d'autres modes de réalisation exposés ci-dessus.

## Revendications

1. Panneau sandwich (10) électriquement conducteur, **caractérisé en ce que** ledit panneau sandwich (10) comprend dans l'ordre suivant:
- une première couche (11) formée d'une plaque qui comprend deux feuilles (111, 112) de carton emprisonnant un matériau électriquement isolant, tel que du plâtre ;
- une deuxième couche (12) en matériau électriquement isolant ;
- une troisième couche (13) en matériau électriquement conducteur ;
- une quatrième couche (14) en matériau électriquement isolant ;
- une cinquième couche (15) en matériau électriquement conducteur ;
- une sixième couche (16) en matériau électriquement isolant.

2. Panneau sandwich (10) selon la revendication 1, **caractérisé en ce que** les deuxième et troisième couches (12, 13), ainsi que les quatrième et cinquième couches (14, 15), sont collées entre elles par dépôt de lignes de colle avec une quantité régulière de colle le long de chaque ligne.

3. Panneau sandwich (10) selon l'une des revendications précédentes, **caractérisé en ce qu'**au moins l'une, de préférence chacune, des couches (13, 15) électriquement conductrices comprend deux feuilles métalliques, de préférence en aluminium, et une feuille en matériau élastique emprisonnée entre lesdites feuilles métalliques.

4. Panneau sandwich (10) conforme à l'une des revendications précédentes, **caractérisé en ce que** ledit panneau sandwich (10) est en outre équipé d'au moins un dispositif électrique, de préférence un dispositif d'éclairage (3), par exemple à LED, qui comprend une ou deux broches (31, 32) de connexion destinée(s) à être piquée(s) dans le panneau (10) et portant deux contacts électriques, les deux contacts électriques étant répartis sur la ou chacune desdites broches (31, 32) de manière à ce que, à l'état piqué de la ou des broches dans le panneau (10), l'un des contacts électriques touche l'une des couches (13, 15) électriquement conductrice, sans toucher l'autre couche (15, 13) qui est touchée par l'autre contact électrique.

5. Panneau sandwich (10) selon la revendication 4, **caractérisé en ce que** la deuxième couche (12) en matériau électriquement isolant est d'épaisseur au moins égale au diamètre de la ou de chaque broche (30 ; 31, 32) du dispositif électrique (3) piquée dans le panneau.

6. Panneau sandwich (10) conforme à l'une des revendications précédentes, **caractérisé en ce que** ledit panneau sandwich (10) est en outre équipé de deux connecteurs (2), l'un des connecteurs étant apte à connecter l'une des couches (13, 15) électriquement conductrices à une borne d'une alimentation électrique, et l'autre des connecteurs étant apte à connecter l'autre des couches (13, 15) électriquement conductrices à l'autre borne de l'alimentation électrique,
et **en ce que** chaque connecteur (2) présente une forme en U, l'extrémité libre de chaque branche (21, 22) étant pointue et chaque branche (21, 22) du U étant fendue (210, 220) longitudinalement depuis son extrémité libre jusqu'à la zone de liaison entre ladite branche (21, 22) et le fond (20) du U.

7. Panneau sandwich (10) selon la revendication 6, **caractérisé en ce que** chaque branche (21, 22) de connecteur (2) est piquée sur une tranche du panneau sandwich (10) de sorte que les portions de branche qui s'étendent de part et d'autre de la fente de ladite branche sont enfoncées respectivement dans les quatrième et sixième couches (14, 16), ou respectivement dans les deuxième (12) et quatrième (14) couches, qui prennent en sandwich la troisième ou cinquième couche (13, 15) électriquement conductrice, ladite troisième ou cinquième couche (13, 15) électriquement conductrice étant prise dans la fente et en contact électrique avec les bords de fente correspondant.

8. Panneau sandwich (10) selon la revendication 7, **caractérisé en ce que** le matériau des deuxième (12), quatrième (14) et sixième couches (16) est de densité inférieure à 300 Kg/m3.

9. Panneau sandwich (10) selon la revendication 8, **caractérisé en ce que** les branches (21, 22) et le fond (20) du U formant chaque connecteur (2) sont plats.

10. Panneau sandwich (10) conforme à l'une des revendications précédentes, **caractérisé en ce que** ledit panneau sandwich (10) est en outre équipé de moyens de fixation dudit panneau sandwich (10) sur un support (9), lesdits moyens de fixation comprenant une vis (4) auto-foreuse qui présente une tête de vis et un corps (40) métallique comprenant une portion d'extrémité (42) filetée, et entre ladite tête et la portion d'extrémité filetée, une portion lisse (41), ladite portion lisse (41) présentant un revêtement électriquement isolant, par exemple en téflon ou époxy, de préférence de couleur différente de celle du corps de vis (4) ainsi revêtu.

11. Panneau sandwich (10) selon la revendication 10, **caractérisé en ce que** la vis (4) présente un diamètre inférieur à l'épaisseur de la quatrième couche (14).

12. Panneau sandwich (10) selon la revendication 10 ou 11, **caractérisé en ce que** ladite portion lisse (41) est de longueur adaptée de manière à traverser les couches (13, 15) électriquement conductrices, tout en laissant une partie du filetage de la vis en prise dans la sixième couche (16) pour maintenir le panneau sandwich (10) en appui contre le support (9) dans lequel est pris la vis (4).

13. Ensemble comprenant :
- un panneau sandwich (10) conforme à l'une des revendications précédentes,
- au moins un dispositif électrique (3) qui comprend une ou deux broches (31, 32) de connexion destinée(s) à être piquée(s) dans le panneau sandwich (10), et
- un outil de poinçonnage (5) comprenant un corps (50) de saisie destiné à être saisi par la main d'un opérateur, et un ou deux poinçons (51, 52) de même longueur pointus à leur extrémité libre et de forme allongée.

14. Ensemble selon la revendication 13, **caractérisé en ce que** le diamètre des poinçons (51, 52) est supérieur ou égal au diamètre de la ou des broches (31, 32) du dispositif électrique (3).

## Patentansprüche

1. Elektrisch leitende Sandwichplatte (10), **dadurch gekennzeichnet, dass** die Sandwichplatte (10) in der folgenden Reihenfolge umfasst:
- eine erste Schicht (11), gebildet von einer Tafel, die zwei Kartonbögen (111, 112) umfasst, die ein elektrisch isolierendes Material wie Gips einschließen;
- eine zweite Schicht (12) aus elektrisch isolierendem Material;
- eine dritte Schicht (13) aus elektrisch leitendem Material;
- eine vierte Schicht (14) aus elektrisch isolierendem Material;
- eine fünfte Schicht (15) aus elektrisch leitendem Material;
- eine sechste Schicht (16) aus elektrisch isolierendem Material.

2. Sandwichplatte (10) nach Anspruch 1, **dadurch gekennzeichnet, dass** die zweite und dritte Schicht (12, 13) sowie die vierte und fünfte Schicht (14, 15) durch Aufbringen von Klebelinien mit einer gleichmäßigen Menge Klebstoff entlang jeder Linie untereinander verklebt sind.

3. Sandwichplatte (10) nach einem der vorangehenden Ansprüche, **dadurch gekennzeichnet, dass** mindestens eine, vorzugsweise jede der elektrisch leitenden Schichten (13, 15) zwei Metallbögen, vorzugsweise aus Aluminium, und einen Bogen aus elastischem Material, der zwischen den Metallbögen eingeschlossen ist, umfasst.

4. Sandwichplatte (10) nach einem der vorangehenden Ansprüche, **dadurch gekennzeichnet, dass** die Sandwichplatte (10) mit mindestens einer elektrischen Vorrichtung, vorzugsweise einer Beleuchtungsvorrichtung (3), beispielsweise mit LED, ausgestattet ist, die einen oder zwei Kontaktstifte (31, 32) umfasst, der/die dazu vorgesehen ist/sind, in die Platte (10) gesteckt zu sein und zwei elektrische Kontakte trägt/tragen, wobei die zwei elektrischen Kontakte über den oder jeden der Stifte (31, 32) derart verteilt sind, dass im gesteckten Zustand des oder der Stifte in die Platte (10) einer der elektrischen Kontakte eine der elektrisch leitenden Schichten (13, 15) berührt, ohne die andere Schicht (15, 13) zu berühren, die von dem anderen elektrischen Kontakt berührt wird.

5. Sandwichplatte (10) nach Anspruch 4, **dadurch gekennzeichnet, dass** die zweite Schicht (12) aus elektrisch isolierendem Material eine Stärke hat, die mindestens gleich dem Durchmesser des oder jedes in die Platte gesteckten Stifts (30; 31, 32) der elektrischen Vorrichtung (3) ist.

6. Sandwichplatte (10) nach einem der vorangehenden Ansprüche, **dadurch gekennzeichnet, dass** die Sandwichplatte (10) ferner mit zwei Verbindern (2) ausgestattet ist, wobei einer der Verbinder imstande ist, eine der elektrisch leitenden Schichten (13, 15) mit einer Klemme einer elektrischen Versorgung zu verbinden, und der andere der Verbinder imstande ist, die andere der elektrisch leitenden Schichten (13, 15) mit der anderen Klemme der elektrischen Versorgung zu verbinden,
und dass jeder Verbinder (2) eine U-Form aufweist, wobei das freie Ende jedes Schenkels (21, 22) spitz ist und jeder Schenkel (21, 22) des U ab seinem freien Ende bis zu einer Verbindungszone zwischen dem Schenkel (21, 22) und dem Boden (20) des U längs (210, 220) geschlitzt ist.

7. Sandwichplatte (10) nach Anspruch 6, **dadurch gekennzeichnet, dass** jeder Schenkel (21, 22) eines Verbinders (2) derart auf eine Kante der Sandwichplatte (10) gesteckt ist, dass die Schenkelabschnitte, die sich auf der einen und der anderen Seite der Kante erstrecken, jeweils in die vierte und sechste Schicht (14, 16) oder jeweils in die zweite (12) und vierte (14) Schicht eingedrückt sind, welche die dritte oder fünfte elektrisch leitende Schicht (13, 15) sandwichartig umschließen, wobei die dritte oder fünfte elektrisch leitende Schicht (13, 15) in dem Schlitz aufgenommen und in elektrischem Kontakt mit den entsprechenden Schlitzrändern ist.

8. Sandwichplatte (10) nach Anspruch 7, **dadurch gekennzeichnet, dass** das Material der zweiten (12), vierten (14) und sechsten Schicht (16) eine Dichte unter 300 kg/m³ hat.

9. Sandwichplatte (10) nach Anspruch 8, **dadurch gekennzeichnet, dass** die Schenkel (21, 22) und der Boden (20) des U, das jeder Verbinder (2) bildet, flach sind.

10. Sandwichplatte (10) nach einem der vorangehenden Ansprüche, **dadurch gekennzeichnet, dass** die Sandwichplatte (10) ferner mit Befestigungsmitteln der Sandwichplatte (10) auf einem Träger (9) ausgestattet ist, wobei die Befestigungsmittel eine selbstschneidende Schraube (4) umfassen, die einen Schraubenkopf und einen metallischen Körper (40), umfassend einen gewindeten Endabschnitt (42), aufweist, und zwischen dem Kopf und dem gewindeten Endabschnitt einen glatten Abschnitt (41), wobei der glatte Abschnitt (41) eine elektrisch isolierende Beschichtung, beispielsweise aus Teflon oder Epoxy, vorzugsweise in unterschiedlicher Farbe als die des so beschichteten Schraubenkörpers (4), umfasst.

11. Sandwichplatte (10) nach Anspruch 10, **dadurch gekennzeichnet, dass** die Schraube (4) einen Durchmesser aufweist, der kleiner als die Stärke der vierten Schicht (14) ist.

12. Sandwichplatte (10) nach Anspruch 10 oder 11, **dadurch gekennzeichnet, dass** der glatte Abschnitt (41) eine Länge hat, die geeignet ist, die elektrisch leitenden Schichten (13, 15) zu durchqueren, wobei ein Teil des Gewindes der Schraube in der sechsten Schicht (16) verbleibt, um die Sandwichplatte (10) abgestützt auf dem Träger (9) zu halten, in welchem die Schraube (4) aufgenommen ist.

13. Einheit, umfassend:
- eine Sandwichplatte (10) nach einem der vorangehenden Ansprüche,
- mindestens eine elektrische Vorrichtung (3), die einen oder zwei Kontaktstifte (31, 32) umfasst, der/die bestimmt ist/sind, in die Sandwichplatte (10) gesteckt zu sein, und
- ein Lochwerkzeug (5), umfassend einen Griffkörper (50), der bestimmt ist, von der Hand eines Bedieners ergriffen zu sein, und eine oder zwei Ahlen (51, 52) derselben Länge, die an ihrem freien Ende spitz und länglich geformt sind.

14. Einheit nach Anspruch 13, **dadurch gekennzeichnet, dass** der Durchmesser der Ahlen (51, 52) größer oder gleich dem Durchmesser des oder der Stifte (31, 32) der elektrischen Vorrichtung (3) ist.

## Claims

1. An electrically conductive sandwich panel (10), **characterized in that** said sandwich panel (10) comprises, in the following order:
- a first layer (11) formed by a plate that comprises two sheets (111, 112) of cardboard capturing an electrically insulating material, such as plaster;
- a second layer (12) made from electrically insulating material;
- a third layer (13) made from electrically conductive material;
- a fourth layer (14) made from electrically insulating material;
- a fifth layer (15) made from electrically conductive material;
- a sixth layer (16) made from electrically insulating material.

2. The sandwich panel (10) according to claim 1, **characterized in that** the second and third layers (12, 13), as well as the fourth and fifth layers (14, 15), are glued to one another by depositing lines of glue with a regular quantity of glue along each line.

3. The sandwich panel (10) according to one of the preceding claims, **characterized in that** at least one, preferably each, of the electrically conductive layers (13, 15) comprises two metallic sheets, preferably made from aluminum, and one sheet of resilient material captured between said metallic sheets.

4. The sandwich panel (10) according to one of the preceding claims, **characterized in that** said sandwich panel (10) is further equipped with at least one electrical device, preferably a lighting device (3), for example by LED, that comprises one or two connection pins (31, 32) intended to be stuck in the panel (10) and bearing two electrical contacts, the two electrical contacts being distributed on the or each of said pins (31, 32) such that, in the state of the pin(s) stuck in the panel (10), one of the electrical contacts touches one of the electrically conductive layers (13, 15), without touching the other layer (15, 13) that is touched by the other electrical contact.

5. The sandwich panel (10) according to claim 4, **characterized in that** the second layer (12) made from electrically insulating material has a thickness at least equal to the diameter of the or each pin (30; 31, 32) of the electrical device (3) stuck in the panel.

6. The sandwich panel (10) according to one of the preceding claims, **characterized in that** said sandwich panel (10) is further equipped with two connectors (2), one of the connectors being suitable for connecting one of the electrically conductive layers (13, 15) to a terminal of an electrical power source, and the other of the connectors being able to connect the other of the electrically conductive layers (13, 15) to the other terminal of the electrical power source,
and **in that** each connector (2) is U-shaped, the free end of each branch (21, 22) being pointed and each branch (21, 22) of the U being longitudinally slotted (210, 220) from its free end to the connecting zone between said branch (21, 22) and the bottom (20) of the U.

7. The sandwich panel (10) according to claim 6, **characterized in that** each connector (2) branch (21, 22) is stuck on an edge of the sandwich panel (10) such that the branch portions that extend on either side of the slot of said branch are respectively pushed into the fourth and sixth layers (14, 16), or respectively into the second (12) and fourth (14) layers, which sandwich the electrically conductive third or fifth layer (13, 15), said electrically conductive third or fifth layer (13, 15) being engaged in the slot and electrically in contact with the corresponding slot edges.

8. The sandwich panel (10) according to claim 7, **characterized in that** the material of the second (12), fourth (14) and sixth (16) layers has a density below 300 kg/m3.

9. The sandwich panel (10) according to claim 8, **characterized in that** the branches (21, 22) and the bottom (20) of the U forming each connector (2) are flat.

10. The sandwich panel (10) according to one of the preceding claims, **characterized in that** said sandwich panel (10) is further equipped with means for fastening said sandwich panel (10) on a support (9), said fastening means comprising a self-tapping screw (4) that has a screw head and a metallic body (40) comprising a threaded end portion (42), and between said head and the threaded end portion, a smooth portion (41), said smooth portion (41) having an electrically insulating coating, for example made from Teflon or epoxy, preferably with a color different from that of the screw body (4) thus coated.

11. The sandwich panel (10) according to claim 10, **characterized in that** the screw (4) has a diameter smaller than the thickness of the fourth layer (14).

12. The sandwich panel (10) according to claim 10 or 11, **characterized in that** said smooth portion (41) has a length suitable for passing through the electrically conductive layers (13, 15), while leaving part of the thread of the screw engaged in the sixth layer (16) to keep the sandwich panel (10) bearing against the support (9) in which the screw (4) is engaged.

13. An assembly comprising:
- a sandwich panel (10) according to one of the preceding claims,
- at least one electrical device (3) that comprises one or two connection pins (31, 32) suitable for being stuck in the sandwich panel (10), and
- a punching tool (5) comprising a grasping body (50) suitable for being grasped by the hand of an operator, and one or two punches (51, 52) of equal length, pointed at their free ends and of elongated shape.

14. The assembly according to claim 13, **characterized in that** the diameter of the punches (51, 52) is greater than or equal to the diameter of the pin(s) (31, 32) of the electrical device (3).
